# EUROPÄISCHE PATENTSCHRIFT

(11) **EP 1 213 312 B1**
(45) Veröffentlichungstag und Bekanntmachung des Hinweises auf die Patenterteilung: **20.08.2003**
(21) Anmeldenummer: 01126982.6
(22) Anmeldetag: 13.11.2001
(51) Int. Cl.: C08G 59/18, C08G 59/50, C08L 63/00

(54) **Epoxidverbindungen enthaltende Mischungen und ihre Verwendung**
Compositions containing epoxy resins and use thereof
Composition contenant de résine époxyde et leur utilisation

(30) Priorität: 04.12.2000 DE 10060314
(43) Veröffentlichungstag der Anmeldung: 12.06.2002
(73) Patentinhaber: Bakelite AG, 58642 Iserlohn-Letmathe (DE)
(72) Erfinder: Schrötz, Markus, Dr., 46045 Oberhausen (DE); Fulgraff, Martin, 44623 Herne (DE); Martischewski, Peter, 47441 Moers (DE); Schillgalies, Jürgen, Dr., 47445 Moers (DE); Herzog, Rolf, Dr., 46240 Bottrop (DE)

(56) Entgegenhaltungen:
- WO-A-93/12187
- US-A- 3 496 130
- US-A- 4 310 695

## Beschreibung

Die Erfindung betrifft neue, kalthärtende Mischungen aus Epoxidverbindungen, Härter, Zusatzmittel und gegebenenfalls weiteren Hilfs- und Füllstoffen, die ein niedriges Reizpotential haben, die lösemittelfrei und selbstverlaufend sind und die im gehärteten Zustand farbstabil sind und eine optisch und haptisch einwandfreie Oberfläche haben.

Aufgrund ihrer hohen mechanischen Festigkeiten und guten chemischen Beständigkeiten finden Epoxidharze vielfach Verwendung als Bindemittel in Beschichtungsmaterialien. Bei entsprechenden kalthärtenden Systemen ist die aminische Härtung bevorzugt, insbesondere die Härtung mit aminendständigen Addukten aus Epoxidverbindungen und Aminen. Diese Addukt-Härter enthalten aus applikatorischen Gründen neben diversen Lösemitteln wie z.B. Benzylalkohol noch Modifizierungsmittel und Beschleuniger.

Die Oberflächen entsprechend gehärteter Mischungen sind zwar geschlossen und glatt, entsprechen aber nicht in allen Belangen den Anforderungen, die an eine dekorative Oberfläche gestellt werden. Produktionsbedingt enthalten die Addukte freie monomere Amine, die während des Härtungsvorgangs an die Oberfläche migrieren, sich dort absondern und somit Störungen hervorrufen. Weiterhin können die an die Oberfläche migrierten Amine mit Feuchtigkeit und Kohlendioxid der Luft unter Bildung von Carbamaten und Carbonaten reagieren, die ebenfalls die optische und haptische Qualität der Oberfläche beeinträchtigen. Außerdem wirken die freien Amine hautreizend oder ätzend.

Es ist daher Aufgabe der Erfindung, kalthärtende Mischungen bereitzustellen, die als Bindemittel Epoxidverbindungen und Härter enthalten, die somit in gehärtetem Zustand die für Epoxidharze charakteristischen guten chemischen Beständigkeiten und hohen mechanischen Festigkeiten zeigen, die nicht hautreizend und lösemittelfrei sind, deren Viskosität aber so niedrig ist, daß sie bei Raumtemperatur bequem verarbeitet werden können und selbstausgleichend sind und die in gehärtetem Zustand eine optisch und haptisch einwandfreie Oberfläche haben.

Die Lösung der Aufgabe erfolgt durch Mischungen entsprechend der Ansprüche 1 bis 5. Diese Mischungen finden bevorzugt Verwendung zur Herstellung von dekorativen Oberflächen, insbesondere von dekorativen Bodenbeschichtungen, von Beschichtungen in Badezimmern und Naßzellen und zur Handlaminierung von Formteilen und zur Herstellung von Verbundwerkstoffen mit optisch und haptisch aesthetischer Oberfläche gemäß der Ansprüche 6 bis 10 sowie durch dekorative Oberflächen, hergestellt aus Mischungen gemäß einem der Ansprüche 1 bis 5, wie in Anspruch 11 beansprucht..

Es wurde gefunden, daß Mischungen enthaltend
a. 5 - 50 Gew.% Epoxidharz mit mindestens zwei Epoxidgruppen pro Molekül
b. 1 - 25 Gew.% epoxidgruppenhaltiger Reaktivverdünner
c. 1 - 25 Gew.% Epoxy-Amin-Addukt mit endständigen Aminogruppen
d. 1 - 20 Gew.% Modifizierungsmittel
e. 0 - 80 Gew.% Füll- und Zusatzstoffe,
wobei das Epoxy-Amin-Addukt ein isoliertes Addukt aus einem Mol Amin und 1 bis 2 Äquivalenten einer oder mehrerer Epoxid-Verbindungen mit bis zu zwei Epoxidgruppen pro Molekül ist und das Modifizierungsmittel ein Xylol-Formaldehyd-Harz oder ein Gemisch aus Xylol-Formaldehyd-Harz mit bis zu 60 Gew.% eines anderen, an sich bekannten Modifizierungsmittels ist, diese Aufgabe lösen.

Eine wesentliche Verbesserung der Oberflächenqualität von mit aminendständigen Epoxy-Amin-Addukten gehärteten Epoxidharzen wird erreicht, wenn als Epoxy-Amin-Addukte isolierte Addukte aus einem Mol Amin mit 1 bis 2 Äquivalenten einer Epoxidverbindung mit bis zu zwei Epoxidgruppen pro Molekül eingesetzt werden. Derartige Addukte sind nahezu geruchlos und nicht hautreizend. Sie sind mit Epoxidverbindungen wesentlich besser verträglich als monomere Amine. Dadurch migrieren sie nicht an die Oberfläche einer entsprechenden Mischung und führen somit nicht zu Störungen durch Absonderung, Ausblühung oder Bildung von Carbamaten. Die gehärteten Produkte sind zwar leicht gefärbt aber farbstabil, d.h., es erfolgt kaum eine weitere Vergilbung.

Derartige isolierte aminendständige Addukte aus einem Mol Amin und ein bis zwei Äquivalenten einer oder mehrerer Epoxidverbindungen, im folgenden Text lediglich als "isolierte Addukte" bezeichnet, sind aus einer älteren Anmeldung der Anmelderin (deutsches Aktenzeichen 100 13 735.0) bekannt. Sie werden hergestellt durch die an sich bekannte Umsetzung von destillierbaren Mono-, Di- und/oder Polyaminen mit Epoxidverbindungen, wobei die Amine mindestens in einem 10%igen molaren Überschuß, bezogen auf die Epoxidgruppen der verwendeten Epoxidverbindungen eingesetzt werden, und nachfolgende destillative Abtrennung der überschüssigen Amine. Der Aminüberschuß kann aus chemischen Überlegungen unbegrenzt sein. Da aber die überschüssigen Amine wieder abdestilliert werden müssen, ist aus wirtschaftlichen Gründen geboten, den Überschuß zu begrenzen. Im allgemeinen werden die Amine daher in einem 10 bis 100%igen molaren Überschuß, bezogen auf die Epoxidgruppen der verwendeten Epoxidverbindungen, eingesetzt. Dadurch wird erreicht, daß lediglich aminendständige Addukte erhalten werden.

Als Amine können sowohl primäre Monoamine wie z.B. Butylamin, Cyclohexylamin, Anilin oder Benzylamin als auch aliphatische, araliphatische, cycloaliphatische, aromatische oder Di- und/oder Polyamine eingesetzt werden, sofern sie unzersetzt destilliert werden können und sofern sie mindestens eine primäre Aminogruppe oder, bei Einsatz von sekundären Aminen, mindestens zwei sekundäre Aminogruppen enthalten, damit gewährleistet ist, daß das gewünschte Addukt mindestens eine freie primäre oder sekundäre Aminogruppe pro Molekül besitzt.
Bevorzugt werden aliphatische Di- und/oder Polyamine eingesetzt. Beispiele sind:
Ethylendiamin, Diethylentriamin, Triethylentetramin, Tetraethylenpentamin, Trimethylhexandiamine, Methylpentandiamine, Pentaethylenhexamin, 1,2-Diaminopropan, 1,3-Diaminopropan, 1,2-, 1,3- und 1,4-Diaminobutan, 3-(2-Aminoethyl)aminopropylamin, N,N'-Bis(3-aminopropyl)ethylendiamin, 1,2-Diaminocyclohexan, 1,3-Diaminocyclohexan, 1,4-Diaminocyclohexan, N-Aminoethylpiperazin, N-Aminopropylpiperazin, N-Aminobutylpiperazin, Phenylendiamine, Xylylendiamine und Isophorondiamin oder Mischungen dieser Amine.

Als Epoxidkomponente können alle Verbindungen einzeln oder im Gemisch miteinander eingesetzt werden, die bei Raumtemperatur gasförmig oder flüssig sind und die mindestens eine Oxirangruppe im Molekül enthalten.
Da die Addukte in bei Umgebungstemperatur verarbeitbaren und selbstausgleichenden, lösemittelfreien Mischungen eingesetzt werden, sind solche mit möglichst niedriger Viskosität bevorzugt. Damit sind auch als Epoxidkomponenten niedermolekulare aliphatische, araliphatische, cycloaliphatische, aromatische bzw. heteroaromatenenthaltende Verbindungen bevorzugt, die bis zu zwei Oxirangruppen enthalten.
Beispiele hierfür sind Butyl-, Hexyl-, Phenyl-, Butylphenyl-, Nonylphenol-, Kresylglycidylether, Resorcindiglycidylether, C₂-C₂₀-Carbonsäureglycidylester sowie Ethylen-, Propylen- oder Butylenoxid.

Die Herstellung der Addukte erfolgt durch Umsetzung der Reaktionspartner miteinander (gegebenenfalls unter Druck) bei Temperaturen im Bereich von 20 - 140°C, bevorzugt im Bereich von 50 - 90°C und halten des Reaktionsgemisches für etwa 1 - 5 h bei einer Temperatur in diesem Bereich. Anschließend erfolgt eine destillative Abtrennung der nicht umgesetzten Amine, bevorzugt unter Vakuum.

Die in der erfindungsgemäßen Mischung eingesetzte Menge an Addukt muß so bemessen sein, daß die damit eingebrachten Aminwasserstoffatome - sofern die Mischung nicht noch weitere Epoxidharzhärter enthält - äquimolar sind zur Summe der Epoxidgruppen der eingesetzten Harze und Reaktivverdünner. Im allgemeinen liegt sie im Bereich von 1 - 25 Gew.%, bezogen auf die Gesamtmischung.

Die als Modifizierungsmittel eingestzten Xylol-Formaldehyd-Harze sind durch säurekatalysierte Kondensation aus Xylol und Formaldehyd hergestellte niedermolekulare, und niedrigviskose aber nicht flüchtige Produkte. Sie sind u.a. aus Ullmanns Encyklopädie der technischen Chemie, 4. Auflage, Band 12, S. 542 oder Houben-Weyl, Methoden der organischen Chemie, Band E 20/Teil 3, Seiten 1796 - 1798 bekannt und im Handel erhältlich. Es ist auch bekannt, diese Harze als Extender für Epoxidharz-Härter-Mischungen einzusetzen, insbesondere, um die Viskosität derartiger Mischungen zu reduzieren. Allerdings haben diese Harze den Nachteil, daß sie die mechanischen Werte von gehärteten Epoxidharz-Formulierungen, in denen sie eingesetzt werden, drastisch verringern. Ihr Einsatz in den erfindungsgemäßen Mischungen hingegen erbrachte zwei überraschende Ergebnisse:
Die mechanischen Festigkeiten der gehärteten Mischungen, insbesondere die Schlagzähigkeit und die E-Moduli sind excellent. Die Mischungen haben eine gegenüber konventionell gehärteten Epoxidharzen erhöhte Elastizität bei hoher Endfestigkeit und versprechen daher eine hohe Langlebigkeit.
Sowohl die optische als auch die haptische Oberflächengüte der gehärteten Mischungen sind wesentlich verbessert: Im Gegensatz zu gewöhnlichen, vergilbenden und speckglänzenden Epoxidharzoberflächen haben die erfindungsgemäßen Oberflächen einen farbstabilen, strahlenden Glanz, durchscheinende Pigmente und färbende Füllstoffe, insbesondere Colorglas oder -quarz kommen voll zur Geltung und die Oberflächen fühlen sich glatt, klebfrei und fest an.

Weiterhin wurde gefunden, daß es möglich ist, bis zu 60 Gew.% der als Modifizierungsmittel eingesetzten Xylol-Formaldehyd-Harze durch andere, an sich bekannte Modifizierungsmittel zu ersetzen, ohne daß die o.g. guten Eigenschaften der Bindemittel verloren gehen. So ist es insbesondere möglich, die eingesetzten Xylol-Formaldehyd-Harze mit bis zu 60% der Gesamtmenge an Modifizierungsmittel mit Mono- oder Dialkylnaphthalinen, insbesondere mit Diisopropylnaphthalinen, zu vermischen, ohne, daß die Oberflächeneigenschaften der resultierenden Mischung verschlechtert werden, obwohl bei ausschließlicher Verwendung von Mono- oder Dialkylnaphthalinen als Modifizierungsmittel von Epoxidharzmischungen stark gestörte Oberflächen entstehen.

Epoxidharze und Modifizierungsmittel sind an sich in beliebigem Verhältnis zueinander mischbar. Dennoch werden die Modifizierungsmittel je nach gewünschter Viskosität der Mischung nur in einer Menge von 1 - 20 Gew.%, bezogen auf die Gesamtmischung, eingesetzt.

In den erfindungsgemäßen Mischungen können alle an sich bekannten polyfunktionellen Epoxidverbindungen eingesetzt werden, die mindestens zwei Epoxidgruppen pro Molekül enthalten.
Bevorzugte Epoxidharze sind bei Raumtemperatur flüssige Polyphenol-Glycidylether, z. B. die Reaktionsprodukte aus Epichlorhydrin und Bisphenol A oder Bisphenol F. Derartige Epoxidharze haben ein Epoxid-Äquivalent von 160- >700. Die Harze können einzeln oder im Gemisch eingesetzt werden.

Die Epoxidharze bestimmen im wesentlichen die mechanischen Eigenschaften der gehärteten Mischung. Daher sind sie auch die Hauptkomponente des Bindemittelsystems und werden in einer Menge von 5 - 50 Gew.%, bezogen auf die Gesamtmischung eingesetzt.

Zur Erniedrigung der Viskosität werden der Mischung an sich bekannte epoxidgruppenhaltige Reaktiwerdünner oder Gemische von Reaktiwerdünnern zugegeben. Dies sind nicht harzartige, flüssige, monomere Verbindungen die mindestens eine 1,2-Epoxidgruppe im Molekül haben. Derartige Reaktivverdünner sind z.B. aus LEE and NEVILLE, Handbook of Epoxy Resins, McGRAW-HILL BOOK COMPANY, 1967, S 13-9 bis 13-16 bekannt. Da solche mit nur einer Epoxidgruppe die mechanischen Eigenschaften des Endproduktes verschlechtern, werden bevorzugt Reaktivverdünner mit zwei Epoxidgruppen im Molekül eingesetzt. Beispiele sind Butandien-, Dimethylpentadien-, Limonen-, Divinylbenzol- oder Vinylcyclohexen-dioxid, Diglycidylether sowie Diglycidylether von aliphatischen, araliphatischen, cycloaliphatischen oder aromatischen Diolen oder Aminen, insbesondere Diglycidylether des Butandiols, Hexandiols, Diethylenglycols, Resorcins oder Anilins.

Die Menge der eingesetzten Reaktiwerdünner liegt im Bereich von 1 - 25 Gew.%, bezogen auf die Gesamtmischung.

Die Mischung aus Epoxidharz, Reaktiwerdünner, Härter und Modifizierungsmittel kann als solche direkt eingesetzt werden. In der Regel werden ihr aber noch bis zu 80 Gew%, bezogen auf die Gesamtmischung an Füll- und Zusatzstoffen zugegeben.
Als Füllstoffen dienen einerseits die bekannten verstärkenden Füllstoffe, wie z.B. Kreide, Silikate, Siliciumdioxid, Bariumsulfat, Lithopone oder Zinksulfid, aber auch pigmentierende oder optisch wirksame Füllstoffe wir z.B. Metallpulver, Glimmerblättchen, Zirkonoxid, Dihafniumoxid oder Titandioxid.

Die fiir die Herstellung dekorativer Oberflächen bevorzugt eingesetzten Füllstoffe aber sind Colorglas und -quarz, eingefärbte Produkte auf silikatischer Basis mit einer durchschnittlichen Korngröße im Bereich von 0,2 bis 1,5 mm, sowie Zirkonsand.

Zusatzmittel, die gegebenenfalls in der erfindungsgemäßen Mischung eingesetzt werden, sind zusätzliche Härterkomponenten oder Zusatzmittel für Härtungsmittel wie an sich bekannte Härtungs-Beschleuniger oder -Verzögerer sowie Pigmente, Verlaufsmittel, Entschäumer oder Entlüftungsmittel.
Insbesondere finden als Zusatzmittel an sich fiir die Härtung aminisch kalthärtender Epoxidharzsysteme bekannte Beschleuniger Verwendung wie z.B. OH-Gruppen enthaltende Kohlenwasserstoffharze, Phenole, tert. Amine, organische Säuren, Novolake und andere, phenolische OH-Gruppen enthaltende Verbindungen.

Zur Herstellung der erfindungsgemäßen Mischung werden zwei Komponenten durch jeweiliges Vermischen der Einzelbestandteile miteinander vorgefertigt. Die eine Komponente enthält Epoxidharz, epoxidgruppenhaltige Reaktiwerdünner, gegebenenfalls Modifizierungsmittel sowie Füll- und Zusatzstoffe, auf keinen Fall aber einen härtenden Mischungsbestandteil. Die andere Komponente enhält das isolierte Epoxy-Amin-Addukt und gegebenenfalls Modifizierungsmittel sowie Füll- und Zusatzstoffe. Die Aufteilung des Modifizierungsmittels sowie der Füll- und Zusatzstoffe auf die beiden Komponenten erfolgt unter dem Hauptgesichtspunkt, daß beide Komponenten eine ähnliche Viskosität im Bereich von 1.000 bis 10.000 mPas bei Verarbeitungstemperatur haben.
Beide Komponenten werden getrennt gelagert und die erfindungsgemäße Mischung wird kurz vor Gebrauch durch Vermischen der beiden Komponenten hergestellt. Dabei werden die zu mischenden Mengen der beiden Komponenten so gewählt, daß die Härtermenge stöchiometrisch der Menge der eingesetzten Epoxidgruppen entspricht.

Nach dem Mischen der beiden Komponenten miteinander hat die Mischung je nach Einstellung noch eine Verarbeitungszeit von 0,25 bis 2 h und härtet dann bei Raumtemperatur innerhalb eines Tages zu einer belastbaren Masse durch. Dies ist insbesondere dann von Bedeutung, wenn ein mehrschichtiger Aufbau der Oberfläche erforderlich ist, im speziellen, wenn als Untergrundvorbehandlung das selbe Bindemittel ohne Füllstoff als klarer Primer eingesetzt wird. Die endgültige Durchhärtung erfolgt innerhalb von 7 bis 28 Tagen.

Aufgrund ihrer Eigenschaften eignen sich die erfindungsgemäßen Mischungen bevorzugt zur Herstellung von dekorativen Oberflächen, insbesondere von dekorativen Bodenbeschichtungen und Beschichtungen in Badezimmern und Naßzellen. Sie bieten sich auch an zur Handlaminierung von Formteilen oder zur Herstellung von Verbundwerkstoffen, bei denen eine Oberfläche gewünscht ist, die in Optik und Haptik ästhetischen Ansprüchen gerecht wird. Derartige Produkte sind z.B. Sportartikel.

Die Applikation der erfindungsgemäßen Mischungen kann mit den üblichen Verfahren, also mittels Streichen, Rakeln, Walzen, Spachteln oder Spritzen erfolgen. Je nach Wahl des Applikationsverfahrens ist u.U. eine Anpassung der Viskosität erforderlich, die durch Variation der Mengen der einzelnen Mischungsbestandteile leicht erzielt werden kann.

### Beispiele

Die jeweils eingesetzten Teile sind Gewichtsteile.

### Beispiel 1

Zu 1,5 mol Triethylentetramin (TETA) wird bei 80°C innerhalb von 2 h 1 Äquivalent Phenylglycidylether getropft. Man läßt bei dieser Temperatur 1 h nachreagieren, senkt dann den Druck auf 50 mbar ab und erhöht die Temperatur, bis eine Innentemperatur von 250°C erreicht ist. Dabei destillieren 0,5 mol TETA ab. Nach dem Abkühlen wird das isolierte Addukt als hellgelbe Flüssigkeit erhalten mit einer Viskosität bei 25°C von 10.200 mPas.

### Beispiel 2

60 Teile Addukt aus Beispiel 1 werden mit 40 Teilen Xylol-Formaldehyd-Harz mit einem Molekulargewicht von 270, einer Viskosität bei 25°C von 50 mPas und eine Tg-Wert von -71°C (Nikanol® Y 51) vermischt. Erhalten wird eine Härterformulierung mit einer Viskosität bei 25°C von 1.900 mPas.
50 Teile dieser Härterformulierung werden mit 100 Teilen einer Mischung aus 80 Teilen Epoxidharz (Diglycidylether auf Basis Bisphenol A und F mit einem Epoxyäquivalent von 173 [Rütapox® 0166/4000]) und 20 Teilen Hexandioldiglycidylether vermischt.
Die Mischung hat bei Raumtemperatur eine Topfzeit von 75 min. Sie ist bei Raumtemperatur nach einem Tag gehärtet. Der T_{g}-Wert beträgt 41°C. Das gehärtete Produkt hat eine einwandfreie, strahlend glänzende Oberfläche und eine leicht gelbliche Farbe. Auch nach mehrtägiger UV-Bestrahlung mit Bewitterung verändert sich die Farbe nur geringfügig und Oberflächenqualität nicht.

### Beispiel 3 (Vergleichsbeispiel)

60 Teile Addukt aus Beispiel 1 werden mit 40 Teilen Benzylalkohol vermischt. Erhalten wird eine Härterformulierung mit einer Viskosität bei 25°C von 550 mPas.
60 Teile dieser Härterformulierung werden mit 100 Teilen einer Mischung aus 80 Teilen Epoxidharz (Diglycidylether auf Basis Bisphenol A und F mit einem Epoxyäquivalent von 173 [Rütapox® 0166/4000]) und 20 Teilen Hexandioldiglycidylether vermischt.
Die Mischung hat bei Raumtemperatur eine Topfzeit von 35 min. Sie ist bei Raumtemperatur nach einem Tag gehärtet. Der T_{g}-Wert beträgt 39°C. Das gehärtete Produkt zeigt eine mattierte, unruhige, leicht rauhe Oberfläche und eine leicht gelbliche Farbe. Nach mehrtägiger UV-Bestrahlung mit Bewitterung verändert sich die Farbe kaum, aber stärker als in Beispiel 2. Die Oberfläche zeigt vermehrt Schlieren und Ausschwimmungen.

## Patentansprüche

1. Mischungen enthaltend
a. 5 - 50 Gew.% Epoxidharz mit mindestens zwei Epoxidgruppen pro Molekül
b. 1 - 25 Gew.% epoxidgruppenhaltiger Reaktivverdünner
c. 1 - 25 Gew.% Epoxy-Amin-Addukt mit endständigen Aminogruppen
d. 1 - 20 Gew.% Modifizierungsmittel
e. 0 - 80 Gew.% Füll- und Zusatzstoffe,
**dadurch gekennzeichnet, daß** das Epoxy-Amin-Addukt ein isoliertes Addukt aus einem Mol Amin und ein bis zwei Äquivalenten einer oder mehrerer Epoxid-Verbindungen mit bis zu zwei Epoxidgruppen pro Molekül ist und daß das Modifizierungsmittel ein Xylol-Formaldehyd-Harz oder ein Gemisch aus Xylol-Formaldehyd-Harz mit bis zu 60 Gew.% eines anderen, an sich bekannten Modifizierungsmittels ist.

2. Mischungen nach Anspruch 1 **dadurch gekennzeichnet, daß** das Epoxy-Amin-Addukt ein Addukt aus einem Mol eines oder mehrerer aliphatischer Polyamine und 1 bis 2 Äquivalenten einer oder mehrerer Epoxidverbindungen mit bis zu zwei Epoxidgruppen pro Molekül ist.

3. Mischungen nach einem der Ansprüche oder 2, **dadurch gekennzeichnet, daß** sie als Zusatzstoffe an sich für die Härtung aminisch kalthärtender Epoxidharzsysteme bekannte Beschleuniger enthalten.

4. Mischungen nach einem oder mehreren der Ansprüche 1 bis 3, **dadurch gekennzeichnet, daß** sie als Füllstoff Colorglas oder -quarz enthalten.

5. Mischungen nach einem oder mehreren der Ansprüche 1 bis 3, **dadurch gekennzeichnet, daß** sie als Füllstoff Zirkonsand enthalten.

6. Verwendung der Mischungen gemäß einem oder mehreren der Ansprüche 1 bis 5 zur Herstellung von dekorativen Oberflächen.

7. Verwendung der Mischungen gemäß einem oder mehreren der Ansprüche 1 bis 5 zur Herstellung von dekorativen Bodenbeschichtungen.

8. Verwendung der Mischungen gemäß einem oder mehreren der Ansprüche 1 bis 5 zur Herstellung von Beschichtungen in Badezimmern und Naßzellen.

9. Verwendung der Mischungen gemäß einem oder mehreren der Ansprüche 1 bis 5 zur Handlaminierung von Formteilen.

10. Verwendung der Mischungen gemäß einem oder mehreren der Ansprüche 1 bis 5 zur Herstellung von Verbundwerkstoffen mit optisch und haptisch ästhetischer Oberfläche.

11. Dekorative Oberflächen, hergestellt aus Mischungen gemäß einem oder mehreren der Ansprüche 1 bis 5.

## Claims

1. Mixtures comprising
a. from 5 to 50% by weight of epoxy resin having at least two epoxide groups per molecule
b. from 1 to 25% by weight of reactive diluent containing epoxide groups
c. from 1 to 25% by weight of epoxy/amine adduct having terminal amino groups
d. from 1 to 20% by weight of modifier
e. from 0 to 80% by weight of fillers and additives,
**characterized in that** the epoxy/amine adduct is an isolated adduct of one mol of amine and from one to two equivalents of one or more epoxy compounds having up to two epoxide groups per molecule, and **in that** the modifier is a xylene-formaldehyde resin or a mixture of xylene-formaldehyde resin with up to 60% by weight of another modifier known per se.

2. Mixtures according to Claim 1, **characterized in that** the epoxy/amine adduct is an adduct of one mol of one or more aliphatic polyamines and from 1 to 2 equivalents of one or more epoxy compounds having up to two epoxide groups per molecule.

3. Mixtures according to Claim 1 or 2, **characterized in that** they comprise, as additives, accelerators known per se for the curing of epoxy resin systems which cold-cure by ar amine route.

4. Mixtures according to one or more of Claims 1 to 3, **characterized in that** they comprise coloured glass or coloured quartz as filler.

5. Mixtures according to one or more of Claims 1 to 3, **characterized in that** they comprise zirconium sand as filler.

6. Use of the mixtures according to one or more of Claims 1 to 5 for the production of decorative surfaces.

7. Use of the mixtures according to one or more of Claims 1 to 5 for the production of decorative coatings for floors.

8. Use of the mixtures according to one or more of Claims 1 to 5 for the production of coatings in bathrooms and wetrooms.

9. Use of the mixtures according to one or more of Claims 1 to 5 for the manual coating of mouldings.

10. Use of the mixtures according to one or more of Claims 1 to 5 for the production of composite materials with a surface attractive to the eye and to the touch.

11. Decorative surfaces produced from mixtures according to one or more of Claims 1 to 5.

## Revendications

1. Mélanges contenant
a. de 5 à 50 % en poids d'une résine époxy ayant au moins deux groupes époxy par molécule
b. de 1 à 25 % en poids d'un diluant réactif renfermant des groupes époxy
c. de 1 à 25 % en poids d'un produit d'addition époxy/amine ayant des groupes amino terminaux
d. de 1 à 20 % en poids d'un agent modificateur
e. de 0 à 80 % en poids de charges et d'additifs,
**caractérisés en ce que** le produit d'addition époxy/amine est un produit d'addition isolé à partir d'une mole d'amine et de un à deux équivalents d'un ou de plusieurs composés époxyde ayant jusqu'à deux groupes époxy par molécule, et **en ce que** l'agent modificateur est une résine xylol/formaldéhyde ou un mélange d'une résine xylol/formaldéhyde avec jusqu'à 60 % en poids d'un autre agent modificateur connu en soi.

2. Mélanges selon la revendication 1, **caractérisés en ce que** le produit d'addition époxy/amine est un produit d'addition à partir d'une mole d'une ou de plusieurs polyamines aliphatiques et de 1 à 2 équivalents d'un ou de plusieurs composés époxyde ayant jusqu'à deux groupes époxy par molécule.

3. Mélanges selon la revendication 1 ou 2, **caractérisés en ce qu'**ils contiennent, en tant qu'additifs, des accélérateurs connus en soi pour le durcissement de systèmes de résines époxy durcissant à froid par amine.

4. Mélanges selon l'une ou plusieurs des revendications 1 à 3, **caractérisés en ce qu'**ils contiennent du verre ou du quartz coloré en tant que charge.

5. Mélanges selon l'une ou plusieurs des revendications 1 à 3, **caractérisés en ce qu'**ils contiennent du sable de zirconium en tant que charge.

6. Utilisation des mélanges selon l'une ou plusieurs des revendications 1 à 5, pour la production de surfaces décoratives.

7. Utilisation des mélanges selon l'une ou plusieurs des revendications 1 à 5, pour la production de revêtements de sols décoratifs.

8. Utilisation des mélanges selon l'une ou plusieurs des revendications 1 à 5, pour la production de revêtements dans des salles de bain et des blocs-eau.

9. Utilisation des mélanges selon l'une ou plusieurs des revendications 1 à 5, pour la stratification manuelle de pièces moulées.

10. Utilisation des mélanges selon l'une ou plusieurs des revendications 1 à 5, pour la production de produits composites avec une surface esthétique sur le plan optique et du point de vue du toucher.

11. Surfaces décoratives produites à partir de mélanges selon l'une ou plusieurs des revendications 1 à 5.
